# EUROPEAN PATENT SPECIFICATION

(11) **EP 3 842 948 B1**
(45) Date of publication and mention of the grant of the patent: **31.05.2023**
(21) Application number: 21168631.6
(22) Date of filing: 15.04.2021
(51) Int. Cl.: G06F 11/36

(54) **METHOD AND APPARATUS FOR TESTING EDGE COMPUTING, DEVICE, AND READABLE STORAGE MEDIUM**
VERFAHREN UND VORRICHTUNG ZUR PRÜFUNG VON KANTENBERECHNUNGEN, VORRICHTUNG UND LESBARES SPEICHERMEDIUM
PROCÉDÉ ET APPAREIL DE TEST DE CALCUL DE BORD, DISPOSITIF ET SUPPORT D'ENREGISTREMENT LISIBLE

(30) Priority: 17.04.2020 CN 202010306686
(43) Date of publication of application: 30.06.2021
(73) Proprietor: BEIJING BAIDU NETCOM SCIENCE AND TECHNOLOGY CO. LTD., 100085 Beijing (CN)
(72) Inventor: Zhang, Hang, Beijing, 100085 (CN); Zhang, Biao, Beijing, 100085 (CN)
(74) Representative: Maiwald GmbH

(56) References cited:
- CN-A- 108 932 535
- CN-A- 110 135 167
- US-B1- 8 826 084

## Description

### FIELD

The disclosure relates to a field of computer technologies, and particularly to a field of edge computing technologies.

### BACKGROUND

Edge computing refers to an open platform that is close to a source of an object or data and integrates network, computing, storage and application core capabilities. A mobile edge platform applies a deep learning model of a cloud to various edge devices. A tester of an edge computing project needs to pay attention to availability and correctness of the deep learning model, and ensure availability, effect and performance of a model finally produced in the edge device.

Presently, a most direct problem for testing the availability and correctness of the model lies in a huge workload. For example, performing a simple model availability regression needs to test at least hundreds of test branches. Most of existing edge computing tests are performed manually, which has a low efficiency and low intelligence.

CN 110135167 A1 discloses an edge computing terminal security level evaluation method for a random forest. The terminal security level evaluation method comprises: S1, setting security test items of a terminal and test results of the security test items; S2, testing the accessed intelligent terminal; S3, determining a corresponding relationship between the security level of the intelligent terminal and the single test result set; S4, calculating a security level corresponding to each edge terminal to obtain a data set; S5, dividing the data set into a training set and a test set; S6, inputting the training set into a random forest for training to obtain a mature classifier model; S7, inputting the test set into a random forest classifier model obtained through training, and comparing an obtained test result with the security level in the step S4 to obtain a standard classifier; and S8, evaluating the security level of the newly accessed terminal by using the standard classifier model. According to the method, the data security requirements of the edge terminal are divided according to the grades, and edge computing side terminal security assessment can be carried out through a quantized objective standard according to confronted security risks and system complexity.

CN 108932535 A1 discloses a machine learning based edge computing clone node identification method. The method comprises: S1, performing upper layer authentication on legal nodes and edge computing nodes; S2, extracting the identity declaration information of a legal node i and an unknown node j; S3, comparing whether the IDs of the node i and the node j are identical, and if so, proceeding to step S4, if not, returning to step S2; S4, extracting channel information of the node i and the node j, calculating correlation degree by using test statistics, and judging whether thenode is a clone node or not, if so, proceeding to step S5, if not, returning to step S2; S5, generating a data set T; S6, adopting a classification algorithm in the machine learning algorithm to train according to a data set of binary classification until a model satisfying the recognition rate standard is generated; S7, identifying a new unknown node u by using the model meeting requirements by the edge computing node. The invention provides a machine learning based edge computing clone node identification method which is suitable for an edge computing scene and has the advantage of high recognition rate.

US 8 826 084 B1 discloses a computer implemented method and system for automated test and retesting using an interactive interface provided by a computer processor comprising: a test case builder, comprising at least one processor, configured to automatically generate code for a test case; a test flow tool, comprising at least one processor, configured to generate a plurality of test flows for the test case; an execution engine, comprising at least one processor, configured to automatically execute the plurality of test flows on a system under test; and an output interface configured to receive output data from the system under test.

### SUMMARY

Embodiments of the disclosure provide a method and an apparatus for testing edge computing, and a readable storage medium, to improve efficiency and intelligence of the edge computing testing.

In a first aspect, embodiments of the disclosure provide a method for testing edge computing according to claim 1.

In a second aspect, embodiments of the disclosure provide an apparatus for testing edge computing according to claim 13.

In a third aspect, embodiments of the disclosure also provide a non-transitory computer readable storage medium having computer instructions stored thereon according to claim 14.

According to embodiments of the disclosure, a technical problem of the low efficiency during testing the availability and correctness of the model is solved, and the testing efficiency and intelligence is improved.

### BRIEF DESCRIPTION OF THE DRAWINGS

The accompanying drawings are used for better understanding the solution and do not constitute a limitation of the disclosure.
FIG. 1 is a flow chart illustrating a method for testing edge computing according to a first embodiment of the disclosure.
FIG. 2a is a flow chart illustrating a method for testing edge computing according to a second embodiment of the disclosure.
FIG. 2b is a schematic diagram illustrating an iOS device management program according to embodiments of the disclosure.
FIG. 3 is a flow chart illustrating a method for testing edge computing according to a third embodiment of the disclosure.
FIG. 4a is a flow chart illustrating a method for testing edge computing according to a fourth embodiment of the disclosure.
FIG. 4b is a flow chart illustrating a model test process according to embodiments of the disclosure.
FIG. 4c is a schematic diagram illustrating a test result according to embodiments of the disclosure.
FIG. 4d is a schematic diagram illustrating another test result according to embodiments of the disclosure.
FIG. 5a is a flow chart illustrating a method for testing edge computing according to a fifth embodiment of the disclosure.
FIG. 5b is a schematic diagram illustrating a list of a directed acyclic graph of an AirFlow according to embodiments of the disclosure.
FIG. 5c is a schematic diagram illustrating a directed acyclic graph of an AirFlow according to embodiments of the disclosure.
FIG. 5d is a schematic diagram illustrating a task state examination and a breakpoint starting-and-stopping operation at each stage of an AirFlow according to embodiments of the disclosure.
FIG. 5e is a schematic diagram illustrating a framework transformation logic according to embodiments of the disclosure.
FIG. 6 is a block diagram illustrating an apparatus for testing edge computing according to embodiments of the disclosure.
FIG. 7 is a block diagram illustrating an electronic device capable of implementing a method for testing edge computing according to embodiments of the disclosure.

### DETAILED DESCRIPTION

Description will be made below to exemplary embodiments of the disclosure with reference to accompanying drawings, which includes various details of embodiments of the disclosure to facilitate understanding and should be regarded as merely examples. Therefore, it should be recognized by the skilled in the art that various changes and modifications may be made to the embodiments described herein. Meanwhile, for clarity and conciseness, descriptions for well-known functions and structures are omitted in the following description.

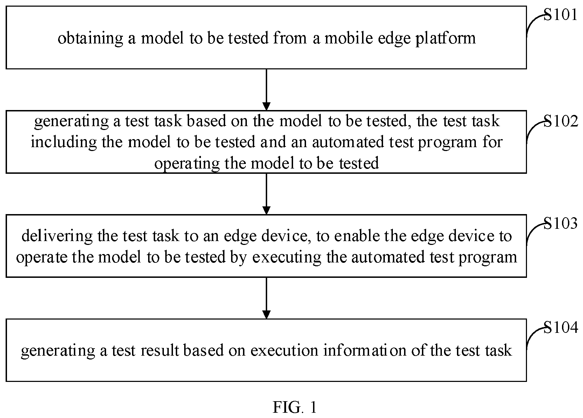

FIG. 1 is a flow chart illustrating a method for testing edge computing according to an embodiment of the disclosure. Embodiments of the disclosure are applicable to a condition where availability and correctness of a model in a mobile edge platform are tested in an edge device.

The mobile edge platform is associated with a mathematical model, particularly a deep learning model which is very popular at present. The mobile edge platform is configured to transform a model of a cloud (a cloud model for short) into a model that may be applied to the edge device. The transformed model is called as a model to be tested. Embodiments of the present disclosure aim to test the availability and correctness of the model to be tested, that is, to test capability and performance of the edge device compatible with the model to be tested.

The method is executed by an apparatus for testing edge computing. The apparatus is implemented by software and/or hardware, and configured in an electronic device with a certain data computing capability. The method for testing the edge computing as illustrated in FIG. 1 includes the following

At block S110, a model to be tested is obtained from a mobile edge platform.

The model to be tested is be obtained by transforming a cloud model by the mobile edge platform, and may also be a model to be tested corresponding to the cloud model and obtained from the outside.

In some embodiments, there is at least one piece of data of the model to be tested. A file type of the model to be tested includes, but is not limited to, library, SDK (software development kit), binary file, and the like. When the model to be tested is a deep learning model, a deep learning framework of the model to be tested includes, but is not limited to, paddle, tensorflow, pytorch (a neural network framework of a python version of Torch) and the like. A deep learning network of the model to be tested includes, but is not limited to, an inception, a vgg (visual geometry group network), and the like.

At block S120, a test task is generated according to the model to be tested. The test task includes the model to be tested and an automated test program for operating the model to be tested.

Based on a test requirement, the test task is generated according to the model to be tested. One test task includes one model to be tested and an automated test program for operating the model to be tested.

In this embodiment, the automated test program is configured to ensure that the model to be tested is operated automatically in the edge device matching the automated test program. For example, the test requirement includes an operating condition of the model A to be tested in the edge device 1. The test task includes the model A to be tested and an automated test program matching the edge device 1. When the automated test program is executed by the edge device 1, an automated operating of the model A to be tested is ensured, and the operating condition of the model A to be tested is obtained.

In some embodiments, in order to reduce a writing amount of the automated test program, the automated test program is generated in advance based on a mobile-related attribute of the edge device and an operating system carried in the edge device. The mobile-related attribute includes: a mobility and a non-mobility. For example, a mobile edge device may be a mobile phone, a portable wearable device, an autonomous vehicle, and the like, a non-mobile edge device may be a desktop computer, a development board, an accelerator, and the like. The operating system includes an iOS (iPhone operation system) and an android operation system of the mobile edge device, and linux, windows, and the like of the non-mobile edge device.

In detail, when the mobile edge device (called as an android device) is equipped with the android operation system, the automated test program is implemented by means of an android debug bridge (adb) and an android interface automation framework such as uiatuomator2, to achieve connection with an android device cluster. This requires each android device to be installed with an application of a mobile interface automation test framework (atx). When the mobile edge device is equipped with the iOS, which is called as an iOS device, an IOS mobile text framework, such as a WDA (web driver agent) is finally selected to implement the automated test program since a bottom layer of a cross-platform automated test tool (appium) is actually implemented by the WDA.

At block S130, the test task is delivered to an edge device, to enable the edge device to operate the model to be tested by executing the automated test program.

In detail, the edge device which the test task is distributed to is selected based on the test requirement. When the test requirement includes all non-mobile edge devices, the test task may be distributed to all the non-mobile edge devices.

The selected edge device is connected with the electronic device, and the test task is delivered to the selected edge device. After the test task is received by the edge device, the edge device parses out the automated test program and the model to be tested, automatically executes the automated test program in local, and installs and operates the model to be tested by the automated test program.

At block S 140, a test result is generated based on execution information of the test task.

The execution information of the test task includes, but is not limited to, an execution state and test data of the test task. A visual test result is generated based on the execution information and displayed on an interface, to facilitate a tester to quickly position a problem. The test result reflects the availability and correctness of the model to be tested and the ability and performance of the test edge device compatible with the model to be tested.

Further, in order to create codes which is more stable and error-free, and has better quality, task assertion is performed after the action at block S140. When the task assertion is successful, subsequent test operations may be continued, and when the task assertion fails or the task assertion is abnormal, an alarm is given.

With embodiments of the disclosure, the model to be tested is obtained from the mobile edge platform, the test task is automatically generated based on the model to be tested, the test task is automatically delivered to the edge device, and the test result is automatically generated based on the execution information of the test task, thereby implementing an automated test process for the availability and correctness of the model to be tested, and improving the intelligence and efficiency of the test.

In the above embodiments and following embodiments, delivering the test task to the edge device includes any of following actions. 1) One test task is delivered to different edge devices. 2) The test task is delivered to the edge device, and a cloud model corresponding to the model to be tested runs in a cloud. 3) Different test tasks is delivered to one edge device, different test tasks including different models to be tested. 4) The test task is delivered to an edge device matching a test scene of the test task, the test scene including a mobile scene and a non-mobile scene.

The action at 1) is applicable to a condition where the operating performance and effect of different edge devices on the model to be tested are compared, and a suitable edge device is recommended to a user. Different edge devices may be devices having different hardware chips, such as an ARM (advanced RISC machine), a DSP(digital signal processor), or a coreml (core machine learning). Alternatively, different edge devices may also be devices having different system environment, such as a python (a computer programming language) version, an opencv (open source computer vision library) version, or a supported deep learning framework version. At the action at 2), the cloud operates the cloud model, and the edge device operates the model to be tested corresponding to the cloud model. The action at 2) is applicable to comparison of performance and effect in cloud and in an edge computing scene for a same model. The action at 3) is applicable to a condition where the performance and effect of one edge device when operating different models to be tested are compared. The action at 4) is applicable to different test scenes. A mobile scene matches a mobile edge device, and a non-mobile scene matches a non-mobile edge device.

This embodiment provides four test ways to support the test in different models, different edge devices and different scenes. In this way, multi-angle and fine-grained testing are implemented, which is facilitated to recommend an edge device suitable for a user scene, reducing a threshold of usage from entry to landing for the user, helping diversification of a deep learning service, implementing reciprocity with the partner, and forming an excellent, high-end and perfect deep learning ecological chain.

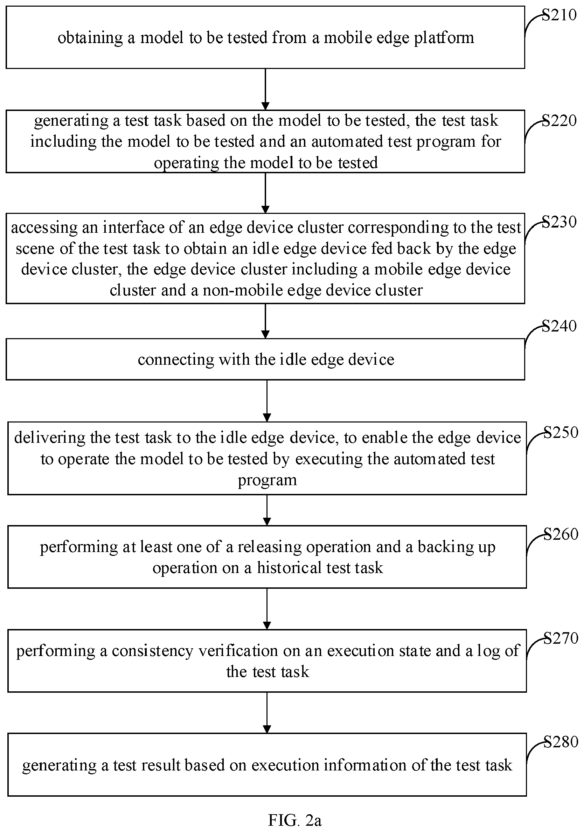

According to embodiments of the disclosure, FIG. 2a is a flow chart illustrating a method for testing edge computing according to an embodiment of the disclosure. This embodiment of the disclosure is provided on the basis of the technical solutions of the above embodiments.

In some embodiments, before the action "delivering the test task to the edge device matching the test scene of the test task", the actions "accessing an interface of an edge device cluster corresponding to the test scene of the test task to obtain an idle edge device fed back by the edge device cluster, the edge device cluster including a mobile edge device cluster and a non-mobile edge device cluster; and connecting with the idle edge device" are performed, thereby delivering the test task to the idle edge device.

In some embodiments, after the action "delivering the test task to the edge device", the actions "executing at least one of a releasing operation and a backing up operation on a historical test task; and/or performing a consistency verification on an execution state" are performed.

The method illustrated in FIG. 2a includes the following.

At block S210, a model to be tested is obtained from a mobile edge platform.

At block S220, a test task is generated based on the model to be tested. The test task includes the model to be tested and an automated test program for operating the model to be tested.

At block S230, the interface of the edge device cluster corresponding to the test scene of the test task is accessed to obtain an idle edge device fed back by the edge device cluster. The edge device cluster includes a mobile edge device cluster and a non-mobile edge device cluster.

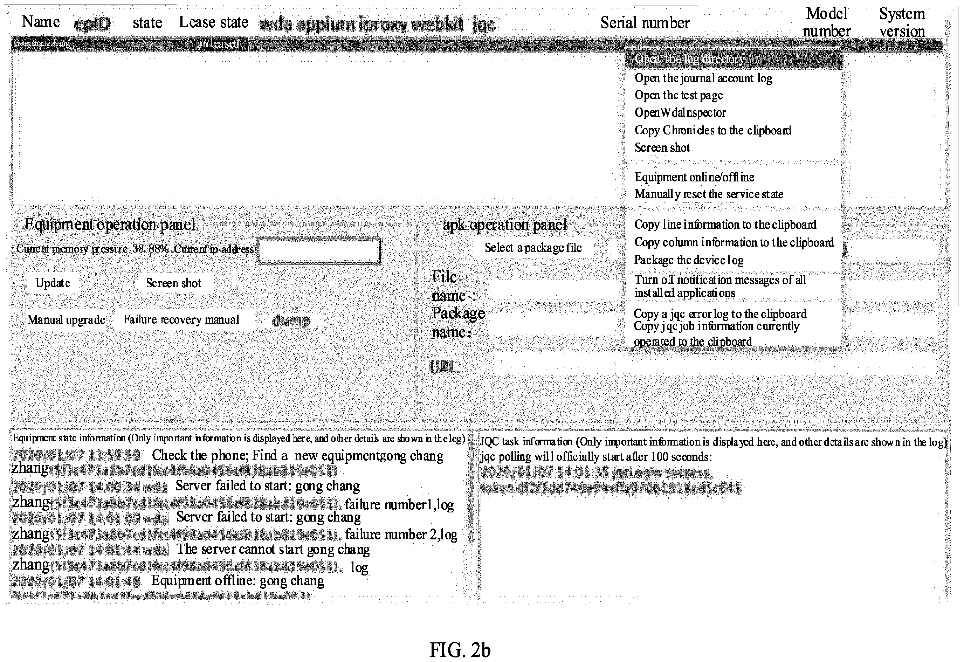

Before the action at block S230, the edge device cluster may to be built. In detail, the mobile edge device cluster includes an android device cluster and an iOS device cluster. For the android device cluster, a mobile cloud test center platform based on an android system may be directly employed. A private android device cluster of a project team is maintained based on such platform. For the iOS device cluster, a private iOS device cluster dedicated to a specified project is built based on a small tool (rmtc-agent) for building the device iOS cluster in combination with a tool such as a wda, a nodej s (JavaScript runtime environment) and an apache (web server). A state, a task execution log, dynamic addition and deletion resources and the like of each iOS device may be viewed in real time. FIG. 2b is a schematic diagram illustrating an iOS device management program according to an embodiment of the disclosure. In FIG. 2b, a log directory called "gong chang zhang" is opened, an epID (equipment identity document), a state, a lease state, a wda, an appium, an iproxy (a proxy), a webkit9 (a browser engine), a jqc (job query check, which is a task center), a serial number, a model number and a system version, etc. of "gong chang zhang" is shown. FIG. 2b also illustrates a device operation panel, an apk (android application package) operation panel, and device state information. The device operation panel includes a current memory pressure, a current IP address, an update button, a screenshot button, a manual upgrade button, a fault recovery manual button, and a dump (which is backup file system). The apk operation panel includes a button for selecting a package file, a file name input box, a package name input box, and a URL (uniform resource locator) input box.

For the non-mobile edge device cluster, an intermediate proxy server is built in an electronic device in advance, and a network address is provided by the intermediate proxy server for each non-mobile edge device in the non-mobile edge device cluster. In detail, software is installed in the non-mobile edge device, and the network address for connecting with the intermediate proxy server is configured, such that the non-mobile edge device obtains an exclusive IP (internet protocol) address, and the exclusive IP address may be directly connected to remotely log into a corresponding non-mobile edge device, thereby integrating a device cluster for managing a series of networking requests.

The edge device cluster provides an external interface for accessing. In this embodiment, an interface of a mobile edge device cluster corresponding to a mobile test scene of the test task and an interface of a non-mobile edge device cluster corresponding to a non-mobile test scene of the test task are accessed. The interface of the mobile edge device cluster includes an interface of the android device cluster and an interface of the iOS device cluster. The edge device cluster feeds back the idle edge device.

At block S240, the idle edge device is connected with.

After the idle edge device is obtained, connecting with the idle edge device may also be called leasing the idle edge device. In detail, the electronic device connects with a network addresses of the idle edge device in the mobile edge device cluster or the non-mobile edge device cluster.

At block S250, the test task is delivered to the idle edge device, to enable the edge device to operate the model to be tested by executing the automated test program.

When the test task comes, a remote idle edge device may be dynamically assigned to perform the test task. When the test task fails, equipment resources are quickly recovered, a task state is reset, and the recovered equipment resources are put into a resource pool of a following test task in real time.

At block S260, at least one of a releasing operation and a backing up operation is performed on a historical test task.

Since there are hundreds or thousands of branches in each iteration test, in order to avoid waste of storage resources caused by accumulation of historical test tasks, a task cleaning mechanism is added in this embodiment. In detail, each batch of task tests are labeled in advance to distinguish different batches of test tasks. The historical test tasks are released and/or backed up. For example, merely a latest batch of test tasks and their test results are saved, and other batches of test tasks are backed up for a specified number of days by default, to facilitate to perform a summary on the historical test tasks.

At block S270, a consistency verification is performed on an execution state and a log of the test task.

During a process that the idle edge device operates the model to be tested, when human intervention occurs, such as plugging and unplugging the idle edge device, the execution state of the test task may be out of sync with the log, thereby causing inconsistency with a final test result. Thus, multi-direction mutual verification mechanism is used to verify the consistency of the execution state and the log of the test task to ensure the consistency and accuracy of the completion of each test task.

In some embodiments, the multi-direction mutual verification mechanism includes: reconnecting a disconnected edge device by employing a heartbeat mechanism; updating the execution state and the log of the test task based on a connection state of the test task with the edge device, such that the execution state is consistent with the log.

It is to be noted that, the execution order of the actions at blocks S260 and S270 is not limited. The action at block S260 may be executed firstly, and then the action at block S270 is executed. Alternatively, the action at block S270 may be executed firstly, and then the action at block S260 is executed. Alternatively, the actions at blocks S260 and S270 may be executed in parallel.

At block S280, a test result is generated based on execution information of the test task.

In this embodiment, by utilizing the edge device cluster, a utilization problem of the edge device may be well solved, and the remote idle edge device may be dynamically assigned to perform the test task.

In the above embodiments and following embodiments, in order to ensure a stable and automated execution of the test task, and solve a problem such as device connection timeout, occasional failure, task interruption, and inaccurate capture of a pop-up window, the method for testing the edge computing includes at least one of following actions.

The first operation: a zombie device on an electronic device is deleted before the test task is delivered to the edge device.

For an android device, connection timeout of a device resource service may occur during executing the test task. In this case, it is checked whether there is the zombie device on the electronic device after the electronic device is connected with or leases the edge device. The zombie device refers to a device that is displayed to be in connection with the electronic device, but has an actual state of OFFLINE. If there is the zombie device on the electronic device, the zombie device is forcibly deleted, a newly leased device, i.e., the idle edge device in the foregoing embodiments, is reconnected, and the test task is delivered to the edge device.

The second operation: before the test task is delivered to the edge device, an idle port of the electronic device is dynamically monitored, and the idle port is bound with the edge device.

When multiple remote mobile devices (such as the android devices) are simultaneously connected to the electronic device, it may be caused that a port of the electronic device is preempted. In this case, an idle port of the electronic device is dynamically monitored, and is dynamically bound and communicated with the mobile device. In some embodiments, when a failure of resource service connection for the test task is caused due to other unforeseen reasons, a corresponding fault-tolerant mechanism is provided, such as reconnection after the connection fails.

The third operation: an automated test framework is reinstalled on the edge device before the test task is delivered to the edge device.

Auiautomator2 (which is an android interface automation framework) may occasionally fail to be started on the Android device. In this case, before the test task is delivered to the edge device, connection with the edge device is performed, an atx installation cache is cleared, the atx is forced to be reinstalled, and service is started. When this way still does not work, before the test task is delivered to the edge device, the edge device is connected locally, and the atx is forced to be reinstalled.

The fourth operation: an installation task of the model to be tested and a trust task of a certificate corresponding to the model to be tested are executed asynchronously after the test task is delivered to the edge device.

On an iOS device, when there are multiple certificates, stability of an automated trust mechanism drops greatly, causing that an untrusted ipa (an iPhone application, which is an Apple application file format), i.e., the model to be tested in embodiments of the disclosure, cannot be opened. Meanwhile, certificate trust, as a part of the installation of the model to be tested, causes timeout of the installation task. For this, the certificate trust and the installation task of the model to be tested are separated. The certificate trust is set to be an asynchronous task mode, that is, the installation task of the model to be tested and the trust task of the certificate corresponding to the model to be tested are executed asynchronously in the process of performing the installation task. When a certificate is detected, the trust task is executed to automatically trust the certificate. In the fourth operation, the correctness of the model to be tested from installation to final operation is improved by 5%-10%, and an average time delay of a single test is shortened by 1 min.

The fifth operation: during a process that the edge device executes the test task, a pop-up window of the model to be tested is detected by a target detection model based on deep learning, and the pop-up window is automatically triggered.

When the model to be tested is operated on the iOS device, the pop-up window is not captured correctly sometimes, causing a failure of executing the test task. Therefore, the target detection model based on deep learning, such as an EasyDL (a customized artificial intelligence training and service platform) object detection model, is trained in advance. A screenshot is performed on a page in which the pop-up window appears, and the screenshot is inputted into the target detection model to obtain a pop-up window detection result, button positions, and the like, to improve accuracy of capturing the pop-up window and a correct rate of key clicking during task execution.

The sixth operation: after the test task is delivered to the edge device, a dependency matching the edge device is selected from a built-in dependency library, and the dependency is delivered to the edge device.

For automation of a non-mobile edge test scene, a main difficulty lies in that different types of non-mobile edge devices have different requirements for the system. For example, an opencv version of the dependency, a cmake (which is an installation tool) version, an execution mode of the model to be tested, a category and a version of a supported deep learning framework are different. In this embodiment, a cost of automated test migration between different non-mobile edge devices is minimized by employing following solutions.

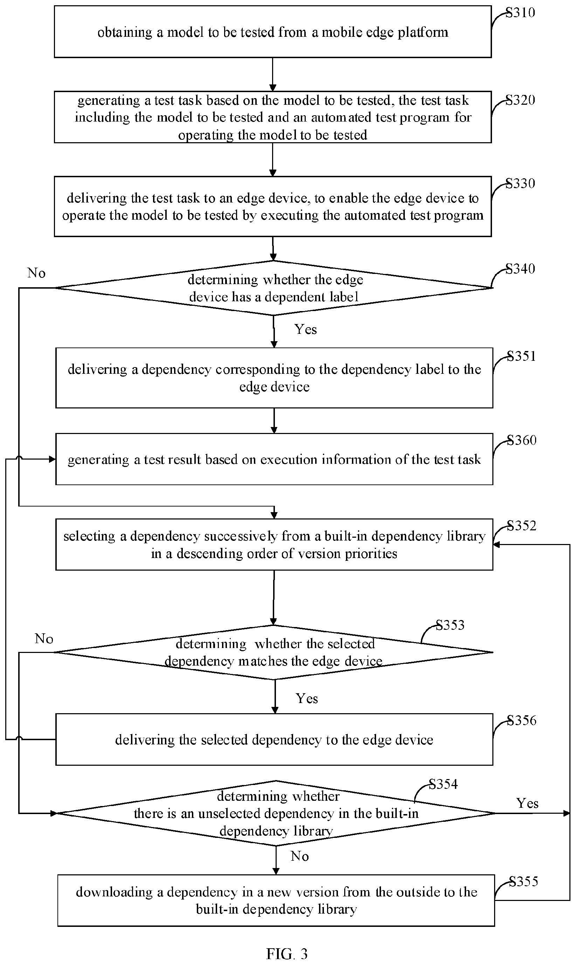

FIG. 3 is a flow chart illustrating a method for testing edge computing according to an embodiment of the disclosure. The method includes the following.

At block S310, a model to be tested is obtained from a mobile edge platform.

At block S320, a test task is generated based on the model to be tested. The test task includes the model to be tested and an automated test program for operating the model to be tested.

In some embodiments, at least two sets of automated test programs may be supported, such as python and C++, to deliver the automated test programs supported by the edge device.

At block S330, the test task is delivered to an edge device, to enable the edge device to operate the model to be tested by executing the automated test program.

In some embodiments, before the action at block S330, the method also includes: when different non-mobile edge devices operate the model to be tested, a current test task is dynamically matched based on task information transmitted by an upstream test task. The task information of the upstream test task includes, but is not limited to, a dependency of the upstream test task, to enable the edge device to meet a dependency requirement of the current test task.

At block S340, it is determined whether the edge device has a dependent label. If so, the action at block S351 is performed; otherwise, the action at block S3 52 is performed.

At block S351, a dependency corresponding to the dependency label is delivered to the edge device, and then the action at block S360 is further performed.

At block S352, a dependency is successively selected from a built-in dependency library in a descending order of version priorities, and then the action at block 353 is further performed.

The built-in dependency library is preset, and includes multiple dependencies, such as multiple deep learning framework dependencies. The version priority for each dependency is set.

At block S353, it is determined whether the selected dependency matches the edge device. If yes, the action at block S356 is performed; otherwise, the action at block S354 is performed.

At block S354: it is determined whether there is an unselected dependency in the built-in dependency library. If yes, return to the action at block S352, otherwise, continue to the action at block S355.

At block S355, a dependency in a new version is downloaded from the outside to the built-in dependency library, and the action at block S352 is returned to.

At block S356, the selected dependency is delivered to the edge device, and then the action at block S360 is further performed.

At block S360, a test result is generated based on execution information of the test task.

In this embodiment, the dependency matching the edge device is selected based on the dependency label and the built-in dependency library, thereby ensuring the automation of testing the edge device, and effectively reducing the cost of the automated test migration between different edge devices.

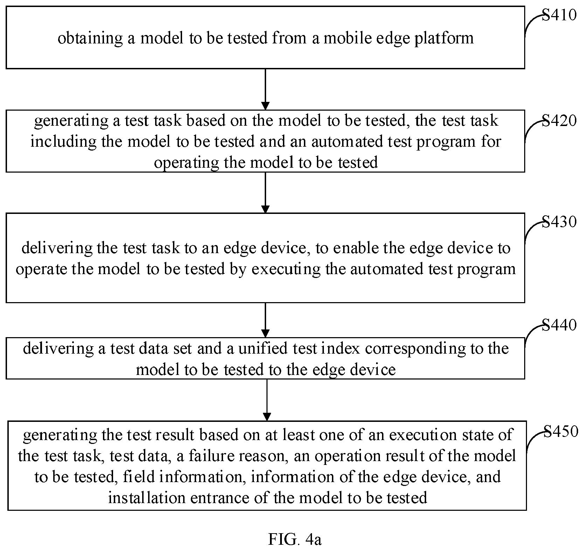

According to embodiments of the disclosure, FIG. 4a is a flow chart illustrating a method for testing edge computing according to an embodiment of the disclosure. This embodiment is provided on the basis of the technical solutions of the above embodiments.

In some embodiments, after the action "delivering the test task to an edge device", the action "delivering a test data set and a unified test index corresponding to the model to be tested to the edge device" is added.

In some embodiments, the action "generating a test result based on execution information of the test task" is refined into "generating the test result based on at least one of an execution state of the test task, test data, a failure reason, an operation result of the model to be tested, field information, information of the edge device, and installation entrance of the model to be tested".

The method for testing the edge computing illustrated in FIG. 4a includes the following.

At block S410, a model to be tested is obtained from a mobile edge platform.

At block S420, a test task is generated based on the model to be tested. The test task includes the model to be tested and an automated test program for operating the model to be tested.

At block S430, the test task is delivered to an edge device, to enable the edge device to operate the model to be tested by executing the automated test program.

At block S440, a test data set and a unified test index corresponding to the model to be tested are delivered to the edge device.

The test data set includes: a public test data set (PublicData) matching a category of the model to be tested, a private test data set (PrivateData) corresponding to a test item to which the model to be tested belongs, and an online user test data set of the test item. The online user test data set may be a data set (BadcaseData) corresponding to unsatisfactory test results of the model to be tested, to improve the accuracy of model evaluation.

In detail, a test data set common to the industry is selected based on the category of the model to be tested, and is called as the public test data set, such as, an ImageNet2012 data set matching image classification, and a VOC 2007 and coco2012 matching an object detection category. The ImageNet2012 data set is a large visual database for the research of visual object recognition software. The VOC 2007 data set includes: a training set including 5011 images), and a test set including 4952 images), of which a total is 9963 images, including 20 categories. The coco2012 data set is a data set used for image recognition, segmentation and description. The private test data set corresponding to the test item to which the model to be tested belongs and the number of data sets may be determined based on the requirement of the test item.

The test data set in this embodiment is relatively neutral, and the test data set common to the industry, in combination with the private test data set and the online user test data set are used, to achieve the convergence of the model and improve the fairness of the test result.

In this embodiment, the unified test index includes: a test index obtained after performing index alignment by communicating with a staff of a core edge computing equipment manufacturer in combination with the algorithm of the deep learning model, and a hardware access index of an intelligent market.

The unified test index in this embodiment meets a unified standard in the industry. By delivering the unified test index, different edge devices may meet the unified test index. Meanwhile, the unified test index is beneficial for multiple projects to approve the test result with each other, and the test result is convincing enough.

At block S450, the test result is generated based on at least one of an execution state of the test task, test data, a failure reason, an operation result of the model to be tested, field information, information of the edge device, and installation entrance of the model to be tested.

In some embodiments, before the action at block S450, the method also includes: obtaining results of multiple operations of the model to be tested; deleting results of first preset number of operations from the results of the multiple operations to obtain results of remaining operations; and generating the operation result of the model to be tested based on the results of the remaining operations.

In detail, the model to be tested is operated for multiple times in the edge device by the automated test program. Since a series of preheating operations such as space allocation is required at the beginning of operating the model to be tested, results of first few operations are poor. Therefore, the results of the first preset number of operations are deleted. The preset number may be 3 or 5, which depends on a quality requirement for the operation result. The results of remaining operations are averaged to obtain the operation result of the model to be tested.

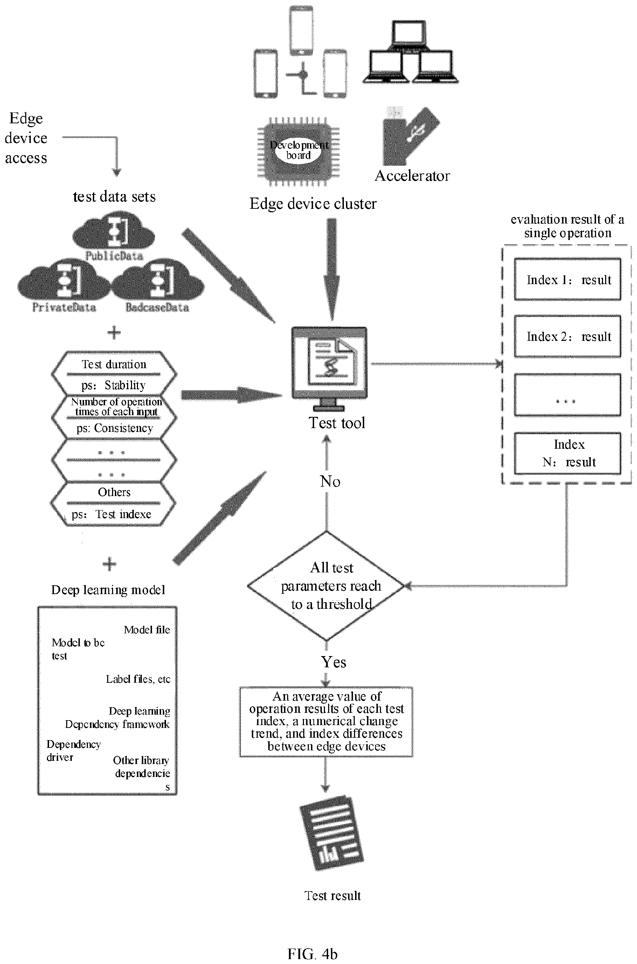

FIG. 4b is a flow chart illustrating a model test process according to embodiments of the disclosure. A test tool is operated in the electronic device. The test tool obtains a deep learning model, a test data set, a test parameter and a test index. The deep learning model includes the model to be tested and a dependency driver. The test parameter includes a test duration, a stability parameter, the number of operation times of each input and a consistency parameter. The test tool accesses the edge device cluster to obtain the idle edge device, and delivers the deep learning model, the test data set and the test index to the idle edge device. The test tool obtains a result of each operation of the idle edge device for each index. When all the test parameters reach a threshold, an average value of operation results of each test index is calculated. For example, after the results of the first preset numbers of each test index, an average value of the results of the remaining operations, a numerical change trend, index differences of the edge devices are calculated to generate the test result.

At block S450, the execution state of the test task includes pass, fail, error and skip. The test data is data generated during the test, such as a start time point and a duration. The information of the edge device includes a network address and a unique identification of the edge device. A failure reason is applicable to a condition where the test task fails to be executed, including an error type and error information. The field, also called as scene, includes a field screenshot during executing the model to be tested.

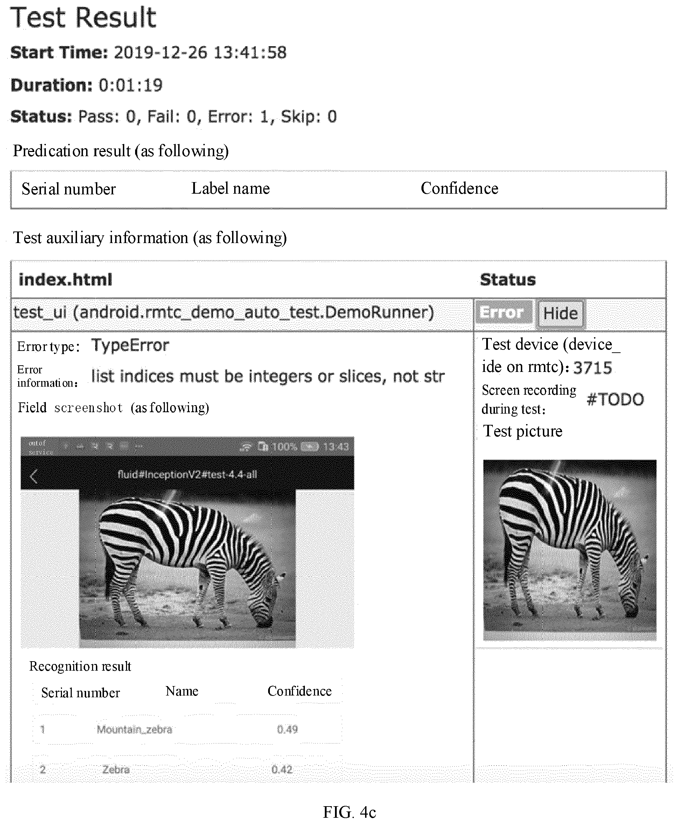

FIG. 4c is a schematic diagram illustrating a test result according to embodiments of the disclosure. At the top of the schematic diagram, the test result includes a start time point (shown as start time), a duration (shown as duration), an execution state (shown as status), and the number of operation times corresponding to each execution state. The execution state includes pass, fail, error and skip.

The model to be tested in FIG. 4c is a target recognition model. FIG. 4c illustrates: an error type: TypeError; an error message: list indexes must be integers or slices, not str; and a field screenshot (shown as following). The operation result of the model to be tested, i.e., a recognition result of the target recognition model, is given below. The recognition result includes a confidence that the scene screenshot is recognized as Mountain_Zebra and a confidence that the field screenshot is recognized as Zebra.

In addition, on the right side of FIG. 4c, it also illustrates an ID of the edge device (i.e., the test device in FIG. 4c), screen recording during the test, and a test picture, to assist a reviewer to gradually reproduce the scene.

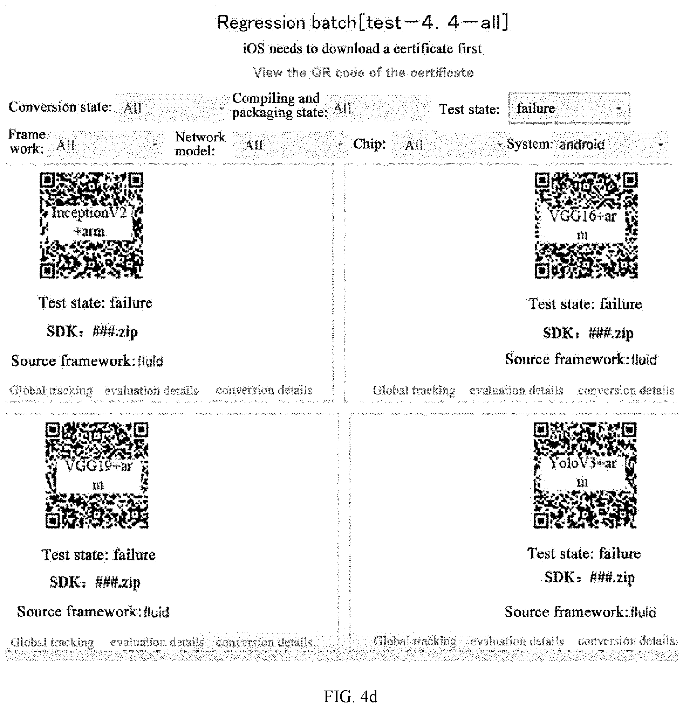

FIG. 4d is a schematic diagram illustrating another test result according to embodiments of the disclosure. FIG. 4d provides a quick installation interface for each model to be tested. For the mobile scene, two-dimensional code information of model installation is provided. For the non-mobile scene, a model storage address for download is provided. In this way, a relevant personnel may quickly install the model when reconstructing the test, and perform the second confirmation artificially. The model to be tested illustrated in FIG. 4d includes Inception v2+arm, VGG19+arm, VGG16+arm and YoloV3+arm. Meanwhile, FIG. 4d illustrates the two-dimensional code information and an SDK storage address of the model to be tested.

In addition, in order to facilitate the relevant personnel to reconstructing, FIG. 4d also illustrates that the execution result is failure, a system carried by the edge device is android, and a source framework is a fluid framework. Furthermore, FIG. 4d also illustrates an entry of global tracking, an entry of test details and an entry of transformation details of each model to be tested in the test process. In some embodiments, in response to a triggering operation of the entry of global tracking, a screen recording of the whole test process of the model to be tested is displayed. In response to a triggering operation of the entry of test details, the execution state, the test data and the failure reason of the model to be tested is displayed. In response to a triggering operation of the entry of transformation details, state information of each stage of transforming the cloud model to the model to be tested is displayed.

In this embodiment, an external dependency, a test data set, an index and the like may be reusable when the model is tested across projects. The external dependency is provided by the built-in dependency library according to the above embodiments, and adding or deleting operations may be dynamically performed on the built-in dependency library. An interface for dynamically adding or deleting the index and the test data set are configured, which facilitates to quickly adapt to different project requirements. Therefore, the method according to this embodiment may be dynamically migrated to other projects to be tested.

The test result generated in this embodiment retains the task state and the scene, thereby effectively ensuring the stability and maintainability of task execution.

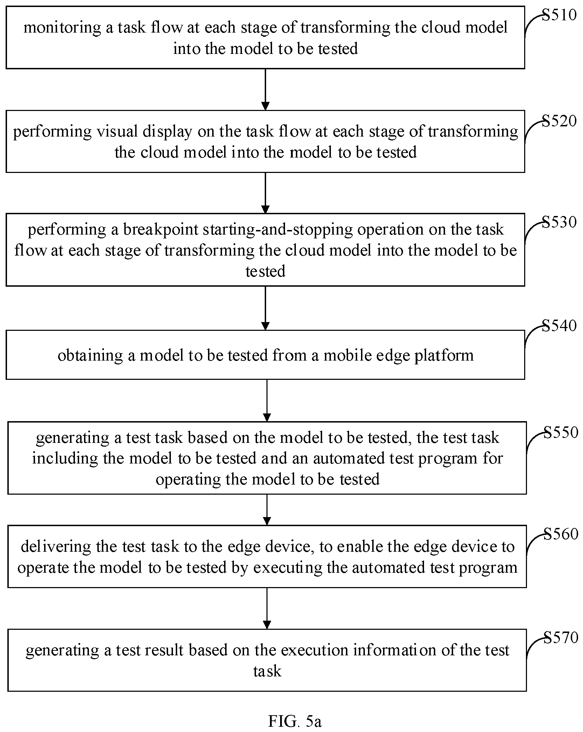

According to embodiments of the disclosure, FIG. 5a is a flow chart illustrating a method for testing edge computing according to an embodiment of the disclosure. Embodiments of the disclosure optimizes the generation operation of the model to be tested on the basis of the technical solutions of the above embodiments. In some embodiments, before obtaining the model to be tested from the mobile edge platform, the method also includes: performing at least one operation of monitoring, visual display and breakpoint starting-and-stopping on a task flow at each stage of transforming the cloud model into the model to be tested.

The method illustrated in FIG. 5a specifically includes the following.

At block S510, a task flow at each stage of transforming the cloud model into the model to be tested is monitored.

The mobile edge platform is configured to transform the cloud model into the model to be tested, and the transformation is performed by implementing task flows of multiple stages. The multiple stages include the following. 1) Framework transformation stage: a framework (i.e., a deep learning framework) of the cloud model is transformed based on fine granularity (po) to obtain the framework of the model to be tested; 2) Compression stage: the model to be tested in the edge device is required to be as small as possible due to a limited capacity and memory of the edge device; 3) Model compatibility and model acceleration: timeliness of an edge computing model is required to be as high as possible, and be compatible with as multiple edge devices as possible. The compatibility here mainly refers to compatibility with a CPU (central processing unit), a GPU (graphics processing unit), an FPGA (field programmable gate array), an NPU (neural-network processing unit) and the like. 4) Model packaging: packaging is performed to obtain a library, sdk and binary file that may be applied to the edge device; 5) Platform supporting services is provided as required, such as online/offline service hosting and license management; 6) A non-mobile edge device suitable for the user scene is recommended, thus trying to reduce the threshold of use for the user from entry to landing.

In this embodiment, a whole process of the task flow starting from the initial framework transformation to the model packaging is monitored, to obtain the state information and scene of the task flow at each stage. The whole process of the task flow from the initial framework transformation to the model packaging includes multiple stages, which are the framework transformation stage, the compression stage, the compatibility stage, the acceleration stage and the packaging stage.

To monitor the state information and the scene of the task flow at each of the above stages in real time, a real-time polling monitoring service may be started to monitor the logs of each stage, and to save input/output information of each stage. Based on the log and the input/output information of each stage, the state information of the task flow at each stage is obtained, and the scene of the task flow at each stage is restored.

At block S520, visual display is performed on the task flow at each stage of transforming the cloud model into the model to be tested.

In detail, the state information and the scene of the task flow at each stage are displayed visually in real time.

At block S530, a breakpoint starting-and-stopping operation is performed on the task flow at each stage of transforming the cloud model into the model to be tested.

In detail, task marking is performed on each stage. In response to a start/stop operation of the user on one stage, an operation of starting/suspending the stage is executed when the task has a task mark.

At block S540, a model to be tested is obtained from a mobile edge platform.

At block S550, a test task is generated based on the model to be tested. The test task includes the model to be tested and an automated test program for operating the model to be tested.

At block S560, the test task is delivered to the edge device, to enable the edge device to operate the model to be tested by executing the automated test program.

At block S570, a test result is generated based on the execution information of the test task.

In an application scene, the compression, compatibility, acceleration and packaging stages of transforming the cloud model into the model to be tested are monitored by employing a distributed task scheduling framework, such as an AirFlow, to obtain the state information and the scene of each corresponding stage respectively. Meanwhile, the visual display and the breakpoint starting and stopping operation are performed on the state information and the field of the task flow at the above stages.

The AirFlow is a programmable workflow platform for scheduling and monitoring. The AirFlow may define a group of tasks having dependencies based on a directed acyclic graph, and execute the group of tasks in turn based on the dependencies. Meanwhile, the AirFlow also provides an abundant command-line tools for system management and controlling. A web management interface of the AirFlow may also conveniently manage and control a scheduling task, monitor the state information and the scene of the test task in real time, facilitating the operation and maintenance and the management of the system, and perform the visual display. Based on this, in this embodiment, a set of tasks at the stages of compression, compatibility, acceleration and packaging of transforming the cloud model into the model to be tested are defined, and the task at each stage is marked through the command line tool to implement the breakpoint starting and stopping operation.

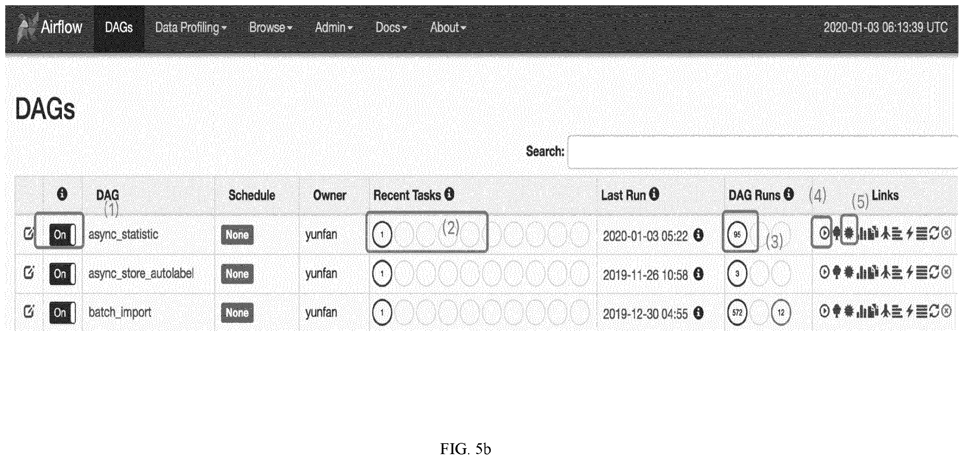

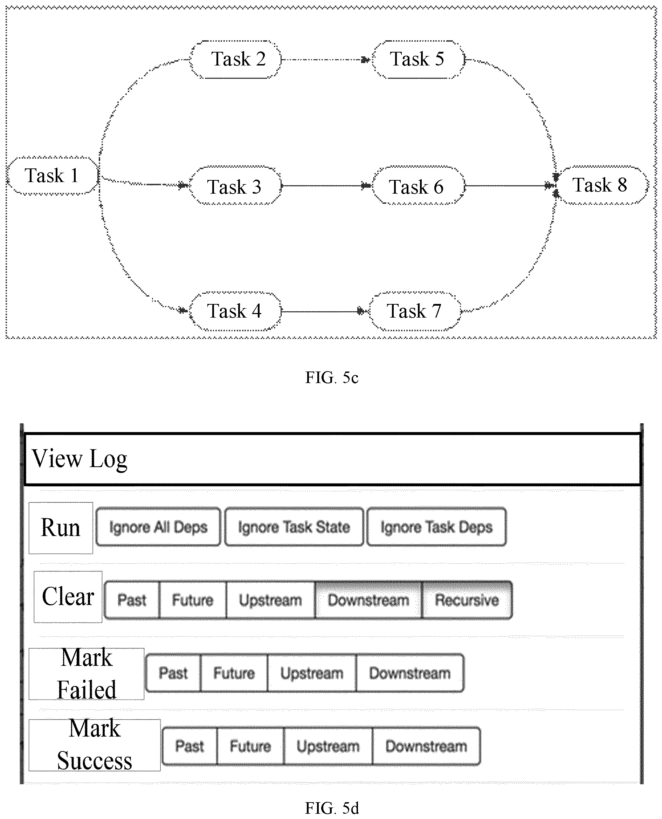

FIG. 5b is a schematic diagram illustrating a list of a directed acyclic graph of AirFlow according to embodiments of the disclosure. (1) illustrated in FIG. 5b represents a task start/stop switch. (2) illustrated in FIG. 5b represents operation state of a task. (3) illustrated in FIG. 5b representing a task to be executed or not distributed. (4) illustrated in FIG. 5b represents manually triggering execution of the task. (5) illustrated in FIG. 5b represents an entry of a task managing-and-control interface. FIG. 5c is a schematic diagram illustrating a directed acyclic graph of AirFlow according to embodiments of the disclosure. FIG. 5c illustrates the dependencies between tasks at each stage. FIG. 5d is a schematic diagram illustrating a task state examination and a breakpoint starting-and-stopping operation at each stage of AirFlow according to embodiments of the disclosure. In FIG. 5d, View Log represents viewing a task log, Run represents running a selected task, Clear represents emptying a task queue, Mark Failed represents marking a task as being in a failure state; and Mark Success represents marking a task as being in a successful state. Each of the Clear, Mark Failed and Mark Success includes historical tasks, future tasks, upstream tasks and downstream tasks. The Clear also includes recursive tasks.

In this embodiment, a distributed executor of the AirFlow is employed to schedule multiple parallel tasks at the same time. By employing the open source framework, key problems such as real-time monitoring, breakpoint restart and the visual display of multiple complex tasks are effectively solved, and a lot of manpower and time costs are saved.

In some embodiments, a log generated by a model transformation mirror library is captured, and the visual display is performed on the captured log. The model transformation mirror library is configured to transform the framework of the cloud model into the framework of the model to be tested.

For convenience of description, the framework transformation stage is introduced first. In this embodiment, a model repository is built in, which may be called as a built-in model repository. The built-in model repository is configured to store cloud models, such as a user self-training deep learning model or a user self-coding training model of other deep learning training platform. Meanwhile, based on a model transformation service at a bottom layer of EasyEdge, a typical business logic of the EasyEdge is extracted, and then some optimization and adaptation logics are added, and finally a set of tools supporting multi-frame transformation are implemented. The EasyEdge is an end computing model generation platform developed based on a paddle mobile. The EasyEdge supports quickly generating an end computing model based on various deep learning frameworks and network structures, and packaging SDK. A core of the tool is a set of docker (application container engine) mirror library, called as a model transformation mirror library. The model transformation mirror library may quickly implement the transformation of the model from an original framework to a target framework, and the number of supported transformation combinations may be synchronously updated with EasyEdge online.

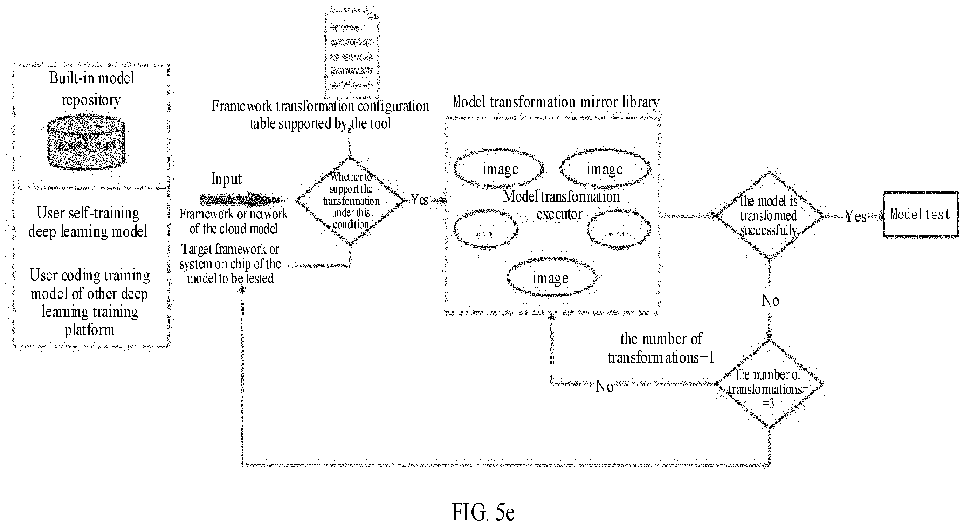

FIG. 5e is a schematic diagram illustrating a framework transformation logic according to embodiments of the disclosure. The framework or network of the cloud model, and a target framework or a system on chip (SoC) of the model to be tested are entered from a built-in model repository (model_zoo). It is determined whether the transformation under this condition is supported by a framework transformation configuration table supported by this tool. If yes, a model transformation executor in the model transformation mirror library (including multiple mirror images) is employed for transformation. If the model transformation is successful, processing such as the compression, the compatibility, the acceleration and the packaging is further performed on the model, and then a model testing stage is proceeded. If the model transformation fails, it is determined whether the number of transformations reaches a threshold. If not, for example the number is 3, the transformation is performed again by employing the model transformation executor in the model transformation mirror library. If the threshold is reached, it is checked whether there is an error in an input transformation condition and the input model.

Based on this tool, the tester only needs to prepare the following. 1) If the required cloud model exists in the built-in model repository, the cloud model may be downloaded automatically. Otherwise, a model of a designated network or a self-training model based on a deep learning training platform is downloaded from an official website. 2) If the cloud model needs to be transformed into the framework of the model to be tested, framework transformation may be automatically performed by utilizing this tool, and then processing such as the compression, the compatibility processing, the acceleration and the packaging is further performed. 3) Test is performed by utilizing the method for testing the edge computing provided in this embodiment to obtain the test result of the model to be tested.

For monitoring the task flow at the framework transformation stage, transforming the deep learning framework of the cloud model to the framework of the model to be tested often needs multiple transformations across the framework. During monitoring of this part, all intermediate stages of the framework transformation stage and a real-time log of transformation at each intermediate stage needs to be quickly understood. Based on this, the log is grabbed from the model transformation mirror library in real time. The log is extracted, transformed and loaded. Interested key information of the loaded log is extracted, and the key information is displayed visually.

In this embodiment, at least one operation of the monitoring, the visual display and the breakpoint starting-and-stopping is performed on the task flow at each stage of transforming the cloud model into the model to be tested, ensuring the validity and correctness of the task flow at each stage of model transformation, and also ensuring the availability, effect and performance of the final target model in the edge device.

Further, the distributed task scheduling framework is employed to monitor, visually display and perform the starting-and-stopping operation on the task flow at the compression, compatibility, acceleration and packaging stages of transforming the cloud model to the model to be tested, thereby effectively saving the human resources of the test and a testing period, and greatly improving the online verification efficiency of the model to be tested.

Further, by setting up the model transformation mirror library, some common depth models may be quickly transformed to the models of the target deep learning framework, to test the compatibility and correctness in different application scenes and different edge devices, and save the tedious preparatory work for model evaluation.

The descriptions of embodiments of the disclosure may be quickly reused in a project test of other edge computing scenes of the deep learning, effectively solving multiple problems such as huge test branches, low test efficiency and complexity of the test scene in such scenes. Meanwhile, a private edge device cluster may also directly serve other non-edge computing test scenes. For testing the deep learning model, a lot of time may also be saved, and the test efficiency is improved, such that the tester merely needs to care about the result data of evaluation indexes, and do not need to pay attention to a previous preparation and test logic of the test. The blank of an edge computing project test and model evaluation on a hardware device (i.e., the non-mobile edge device) is filled.

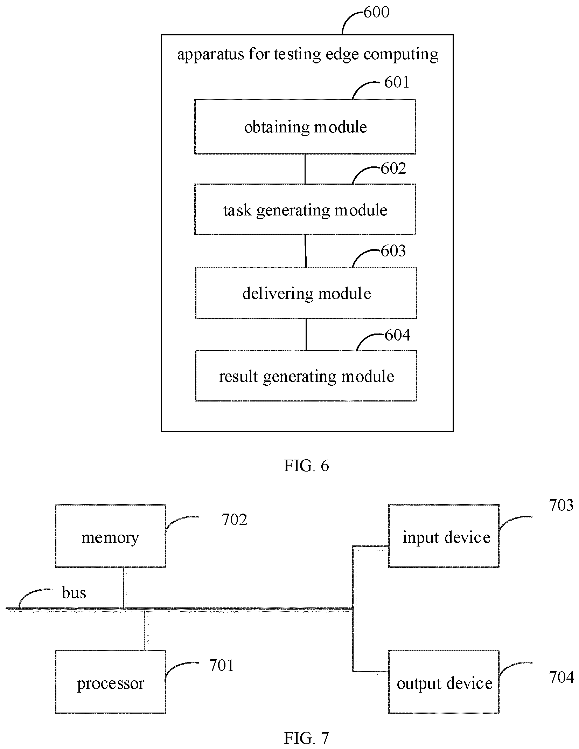

According to embodiments of the disclosure, FIG. 6 is a block diagram illustrating an apparatus for testing edge computing according to embodiments of the disclosure. This embodiment may be applied to a condition where availability and correctness of a model in a mobile edge platform are tested in an edge device. The apparatus is implemented by software and/or hardware, and configured in an electronic device with a certain data computing power.

The apparatus 600 for testing the edge computing illustrated in FIG. 6 includes: an obtaining module 601, a task generating module 602, a delivering module 603, and a result generating module 604.

The obtaining module 601 is configured to obtain a model to be tested from a mobile edge platform. The task generating module 602 is configured to generate a test task based on the model to be tested, the test task including the model to be tested and an automated test program for operating the model to be tested. The delivering module 603 is configured to deliver the test task to an edge device, to enable the edge device to operate the model to be tested by executing the automated test program. The result generating module 604 is configured to generate a test result based on execution information of the test task.

In embodiments of the disclosure, the model to be tested is obtained from the mobile edge platform, the test task is automatically generated based on the model to be tested, the test task is automatically delivered to the edge device, and the test result is automatically generated based on the execution information of the test task, thereby implementing an automated test process for the availability and correctness of the model to be tested, and improving the intelligence and efficiency of the test.

Further, the delivering module 603 is configured to perform any operation of: delivering the test task to different edge devices; delivering the test task to the edge device, and operating a cloud model corresponding to the model to be tested in a cloud; delivering different test tasks to one edge device, different test tasks including different models to be tested; and delivering the test task to an edge device matching a test scene of the test task, the test scene including a mobile scene and a non-mobile scene.

Further, the apparatus also includes an accessing and connecting module. The accessing and connecting module is configured to: access an interface of an edge device cluster corresponding to the test scene of the test task to obtain an idle edge device fed back by the edge device cluster, the edge device cluster including a mobile edge device cluster and a non-mobile edge device cluster; and connect with the idle edge device. Correspondingly, the delivering module 603 is configured to deliver the test task to the idle edge device.

Further, the apparatus also includes a providing module. The providing module is configured to provide, by an intermediate proxy server, a network address for each non-mobile edge device in the non-mobile edge device cluster. The accessing and connecting module, when connecting with the idle edge device, is configured to connect with the network address of the idle edge device in the non-mobile edge device cluster.

Further, the apparatus also includes a releasing and backing-up module, and a consistency verification module. The releasing and backing-up module is configured to perform at least one of a releasing operation and a backing up operation on a historical test task. The consistency verification module is configured to perform a consistency verification on an execution state and a log of the test task.

Further, the apparatus also includes a deleting module, a binding module, and a framework reinstalling module. The deleting module is configured to delete a zombie device on an electronic device. The binding module is configured to dynamically monitor an idle port of the electronic device, and to bind the idle port with the edge device. The framework reinstalling module is configured to reinstall an automated test framework on the edge device.

Further, the apparatus also includes an asynchronous execution module, a pop-up window triggering module, and a dependency delivering module. The asynchronous execution module is configured to execute an installation task of the model to be tested and a trust task of a certificate corresponding to the model to be tested asynchronously. The pop-up window triggering module is configured to detect a pop-up window of the model to be tested by a target detection model based on deep learning and to automatically trigger the pop-up window during executing the test task by the edge device. The dependency delivering module is configured to select a dependency matching the edge device from a built-in dependency library, and to deliver the dependency to the edge device.

Further, the apparatus also includes a data set and index delivering module, configured to deliver a test data set and a unified test index corresponding to the model to be tested to the edge device. The test data set includes a public test data set matching a category of the model to be tested, a private test data set corresponding to a test item to which the model to be tested belongs, and an online user test data set of the test item.

Further, the result generating module 604 is configured to: generate the test result based on at least one of an execution state of the test task, test data, a failure reason, an operation result of the model to be tested, field information, information of the edge device, and installation entrance of the model to be tested.

Further, the apparatus also includes an operation result generating module. The operation result generating module is configured to: obtain results of multiple operations of the model to be tested; delete results of first preset numbers of operations from the results of the multiple operations to obtain results of remaining operations; and generate the operation result of the model to be tested based on the results of the remaining operations.

Further, the apparatus also includes an operation module. The operation module is configured to perform at least one operation of monitoring, visual display and breakpoint starting-and-stopping on a task flow at each stage of transforming the cloud model into the model to be tested.

Further, the operation module is configured to: employ a distributed task scheduling framework to perform the monitoring, the visual display and the breakpoint starting-and-stopping operation on a task flow at compression, compatibility, acceleration and packaging stages of transforming the cloud model into the model to be tested; and capture a log generated by a model transformation mirror library, and perform visual display on the log captured, the model transformation mirror library being configured to transform a framework of the cloud model into a framework of the model to be tested.

The above apparatus for testing the edge computing may execute the method for testing the edge computing according to any one of embodiments of the disclosure, and has beneficial effects and corresponding functional modules for executing the method for testing the edge computing.

According to embodiments of the disclosure, the disclosure also provides an electronic device and a readable storage medium.

As illustrated in FIG. 7, FIG. 7 is a block diagram illustrating an electronic device capable of implementing a method for testing edge computing according to embodiments of the disclosure. The electronic device aims to represent various forms of digital computers, such as a laptop computer, a desktop computer, a workstation, a personal digital assistant, a server, a blade server, a mainframe computer and other suitable computer. The electronic device may also represent various forms of mobile devices, such as personal digital processing, a cellular phone, a smart phone, a wearable device and other similar computing device. The components, connections and relationships of the components, and functions of the components illustrated herein are merely examples, and are not intended to limit the implementation of the disclosure described and/or claimed herein.

As illustrated in FIG. 7, the electronic device includes: one or more processors 701, a memory 702, and interfaces for connecting various components, including a high-speed interface and a low-speed interface. Various components are connected to each other via different buses, and may be mounted on a common main board or in other ways as required. The processor may process instructions executed within the electronic device, including instructions stored in or on the memory to display graphical information of the GUI (graphical user interface) on an external input/output device (such as a display device coupled to an interface). In other implementations, multiple processors and/or multiple buses may be used together with multiple memories if desired. Similarly, multiple electronic devices may be connected, and each device provides some necessary operations (for example, as a server array, a group of blade servers, or a multiprocessor system). In FIG. 7, a processor 701 is taken as an example.

The memory 702 is a non-transitory computer readable storage medium provided by the disclosure. The memory is configured to store instructions executable by at least one processor, to enable the at least one processor to execute the method for testing the edge computing provided by the disclosure. The non-transitory computer readable storage medium provided by the disclosure is configured to store computer instructions. The computer instructions are configured to enable a computer to execute the method for testing the edge computing provided by the disclosure.

As the non-transitory computer readable storage medium, the memory 702 may be configured to store non-transitory software programs, non-transitory computer executable programs and modules, such as program instructions/module (such as the obtaining module 601, the task generating module 602, the delivering module 603, and the result generating module 604 illustrated in FIG. 6) corresponding to the method for testing the edge computing according to embodiments of the disclosure. The processor 701 is configured to execute various functional applications and data processing of the server by operating non-transitory software programs, instructions and modules stored in the memory 702, that is, implements the method for testing the edge computing according to the above method embodiments.

The memory 702 may include a storage program region and a storage data region. The storage program region may store an application required by an operating system and at least one function. The storage data region may store data created according to predicted usage of the electronic device based on the semantic representation. In addition, the memory 702 may include a high-speed random access memory, and may also include a non-transitory memory, such as at least one disk memory device, a flash memory device, or other non-transitory solid-state memory device. In some embodiments, the memory 702 may optionally include memories remotely located to the processor 701, and these remote memories may be connected to the electronic device via a network. Examples of the above network include, but are not limited to, an Internet, an intranet, a local area network, a mobile communication network and combinations thereof.

The electronic device capable of implementing the method for testing the edge computing may also include: an input device 703 and an output device 704. The processor 701, the memory 702, the input device 703, and the output device 704 may be connected via a bus or in other means. In FIG. 7, the bus is taken as an example.

The input device 703 may receive inputted digital or character information, and generate key signal input related to user setting and function control of the electronic device capable of implementing the method for testing the edge computing, such as a touch screen, a keypad, a mouse, a track pad, a touch pad, an indicator stick, one or more mouse buttons, a trackball, a joystick and other input device. The output device 704 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be the touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general purpose programmable processor, may receive data and instructions from a storage system, at least one input device, and at least one output device, and may transmit data and the instructions to the storage system, the at least one input device, and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including a machine readable medium that receives machine instructions as a machine readable signal. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components and the front-end component. Components of the system may be connected to each other via digital data communication in any form or medium (such as, a communication network). Examples of the communication network include a local area network (LAN), a wide area networks (WAN), and the Internet.

The computer system may include a client and a server. The client and the server are generally remote from each other and generally interact via the communication network. A relationship between the client and the server is generated by computer programs operated on a corresponding computer and having a client-server relationship with each other.

It should be understood that, steps may be reordered, added or deleted by utilizing flows in the various forms illustrated above. For example, the steps described in the disclosure may be executed in parallel, sequentially or in different orders, so long as desired results of the technical solution disclosed in the disclosure may be achieved, there is no limitation here.

The above detailed implementations do not limit the protection scope of the disclosure. It should be understood by the skilled in the art that various modifications, combinations, subcombinations and substitutions may be made based on design requirements and other factors.

## Claims

1. A method for testing edge computing, comprising:
obtaining (S101, S210, S310, S410, S540) a model to be tested from a mobile edge platform, wherein the mobile edge platform is associated with a deep learning model and wherein the mobile edge platform is configured to transform a model of a cloud into a model that is be applied to an edge device, the transformed model being the model to be tested;
generating (S102, S220, S320, S420, S550) a test task based on the model to be tested, the test task comprising the model to be tested and an automated test program for operating the model to be tested;
delivering (S103, S330, S430, S560) the test task to an edge device, to enable the edge device to operate the model to be tested by executing the automated test program; and
generating (S104, S280, S360, S570) a test result based on execution information of the test task, the test result reflecting availability and correctness of the model to be tested and ability and performance of the edge device compatible with the model to be tested.

2. The method of claim 1, wherein delivering (S103, S330, S430, S560) the test task to the edge device comprises any of:
delivering the test task to different edge devices;
delivering the test task to the edge device, and operating a cloud model corresponding to the model to be tested in a cloud;
delivering different test tasks to one edge device, different test tasks comprising different models to be tested; and
delivering the test task to an edge device matching a test scene of the test task, the test scene comprising a mobile scene and a non-mobile scene.

3. The method of claim 2, before delivering the test task to the edge device matching the test scene of the test task, further comprising:
accessing (S230) an interface of an edge device cluster corresponding to the test scene of the test task to obtain an idle edge device fed back by the edge device cluster, the edge device cluster comprising a mobile edge device cluster and a non-mobile edge device cluster; and
connecting (S240) with the idle edge device;
wherein, delivering the test task to the edge device matching the test scene of the test task comprises:
delivering (S250) the test task to the idle edge device.

4. The method of claim 3, before accessing (S230) the interface of the edge device cluster corresponding to the test scene of the test task, further comprising:
providing, by an intermediate proxy server, a network address for each non-mobile edge device in the non-mobile edge device cluster;
wherein, connecting (S240) with the idle edge device comprises:
connecting with the network address of the idle edge device in the non-mobile edge device cluster.

5. The method of any of claims 1 to 4, after delivering (S103, S330, S430, S560) the test task to the edge device, further comprising:
performing (S260) at least one of a releasing operation and a backing up operation on a historical test task; and/or
performing (S270) a consistency verification on an execution state and a log of the test task.

6. The method of any of claims 1 to 5, before delivering (S103, S330, S430, S560) the test task to the edge device, further comprising at least one of:
deleting a zombie device on an electronic device;
dynamically monitoring an idle port of the electronic device, and binding the idle port with the edge device; and
reinstalling an automated test framework on the edge device.

7. The method of any of claims 1 to 6, after delivering (S103, S330, S430, S560) the test task to the edge device, further comprising at least one of:
executing an installation task of the model to be tested and a trust task of a certificate corresponding to the model to be tested asynchronously;
detecting a pop-up window of the model to be tested by a target detection model based on deep learning and automatically triggering the pop-up window during executing the test task by the edge device; and
selecting a dependency matching the edge device from a built-in dependency library, and delivering the dependency to the edge device.

8. The method of any of claims 1 to 7, after delivering (S103, S330, S430, S560) the test task to the edge device, further comprising:
delivering (S440) a test data set and a unified test index corresponding to the model to be tested to the edge device;
wherein the test data set comprises a public test data set matching a category of the model to be tested, a private test data set corresponding to a test item to which the model to be tested belongs, and an online user test data set of the test item.

9. The method of any of claims 1 to 8, wherein generating (S104, S280, S360, S570) the test result based on the execution information of the test task comprises:
generating (S450) the test result based on at least one of an execution state of the test task, test data, a failure reason, an operation result of the model to be tested, field information, information of the edge device, and installation entrance of the model to be tested.

10. The method of claim 9, before generating (S104, S280, S360, S570) the test result based on the execution information of the test task, further comprising:
obtaining results of a plurality of operations of the model to be tested;
deleting results of first preset numbers of operations from the results of the plurality of operations to obtain results of remaining operations; and
generating the operation result of the model to be tested based on the results of the remaining operations.

11. The method of any one of claims 1 to 10, before obtaining (S101, S210, S310, S410, S540) the model to be tested from the mobile edge platform, further comprising:
performing at least one operation of monitoring, visual display and breakpoint starting-and-stopping on a task flow at each stage of transforming the cloud model into the model to be tested.

12. The method of claim 11, wherein performing the at least one operation of monitoring, visual display and breakpoint starting-and-stopping on the task flow at each stage of transforming the cloud model into the model to be tested comprises:
employing a distributed task scheduling framework to perform the monitoring, the visual display and the breakpoint starting-and-stopping on a task flow at compression, compatibility, acceleration and packaging stages of transforming the cloud model into the model to be tested; and
capturing a log generated by a model transformation mirror library, and performing visual display on the log captured, the model transformation mirror library being configured to transform a framework of the cloud model into a framework of the model to be tested.

13. An apparatus (660) for testing edge computing, comprising:
an obtaining module (601), configured to obtain a model to be tested from a mobile edge platform, wherein the mobile edge platform is associated with a deep learning model and wherein the mobile edge platform is configured to transform a model of a cloud into a model that is be applied to an edge device, the transformed model being the model to be tested;
a task generating module (602), configured to generate a test task based on the model to be tested, the test task comprising the model to be tested and an automated test program for operating the model to be tested;
a delivering module (603), configured to deliver the test task to an edge device, to enable the edge device to operate the model to be tested by executing the automated test program; and
a result generating module (604), configured to generate a test result based on execution information of the test task, the test result reflecting availability and correctness of the model to be tested and ability and performance of the edge device compatible with the model to be tested.

14. A non-transitory computer readable storage medium having computer instructions stored thereon, wherein the computer instructions are configured to cause a computer to execute the method for testing edge computing according to any one of claims 1 to 12.

## Patentansprüche

1. Verfahren zum Testen von Edge-Computing, umfassend:
Erhalten (S101, S210, S310, S410, S540) eines zu testenden Modells von einer Mobile-Edge-Plattform, wobei die Mobile-Edge-Plattform einem Deep-Learning-Modell zugeordnet ist und wobei die Mobile-Edge-Plattform dazu ausgebildet ist, ein Modell einer Cloud in ein Modell zu transformieren, das auf ein Edge-Gerät angewendet wird, wobei das transformierte Modell das zu testende Modell ist;
Erzeugen (S102, S220, S320, S420, S550) einer Testaufgabe basierend auf dem zu testenden Modell, wobei die Testaufgabe das zu testende Modell und ein automatisiertes Testprogramm zum Betreiben des zu testenden Modells umfasst;
Übermitteln (S103, S330, S430, S560) der Testaufgabe an ein Edge-Gerät, um es dem Edge-Gerät zu ermöglichen, das zu testende Modell durch Ausführen des automatisierten Testprogramms zu betreiben; und
Erzeugen (S104, S280, S360, S570) eines Testergebnisses basierend auf Ausführungsinformationen der Testaufgabe, wobei das Testergebnis die Verfügbarkeit und Korrektheit des zu testenden Modells und die Fähigkeit und Leistung des mit dem zu testenden Modell kompatiblen Edge-Geräts widerspiegelt.

2. Verfahren nach Anspruch 1, wobei das Übermitteln (S103, S330, S430, S560) der Testaufgabe an das Edge-Gerät umfasst:
Übermitteln der Testaufgabe an unterschiedliche Edge-Geräte;
Übermitteln der Testaufgabe an das Edge-Gerät, und Betreiben eines Cloud-Modells, das dem zu testenden Modell entspricht, in einer Cloud;
Übermitteln unterschiedlicher Testaufgaben an ein Edge-Gerät, wobei unterschiedliche Testaufgaben unterschiedliche zu testende Modelle umfassen; und
Übermitteln der Testaufgabe an ein Edge-Gerät, das zu einer Testszene der Testaufgabe passt, wobei die Testszene eine mobile Szene und eine nicht mobile Szene umfasst.

3. Verfahren nach Anspruch 2, das vor dem Übermitteln der Testaufgabe an das Edge-Gerät, das zu der Testszene der Testaufgabe passt, ferner umfasst:
Zugreifen (S230) auf eine Schnittstelle eines Edge-Geräte-Clusters, das der Testszene der Testaufgabe entspricht, um ein vom Edge-Geräte-Cluster zurückgemeldetes inaktives Edge-Gerät zu erhalten, wobei das Edge-Geräte-Cluster ein mobiles Edge-Geräte-Cluster und ein nicht-mobiles Edge-Geräte-Cluster umfasst; und
Verbinden (S240) mit dem inaktiven Edge-Gerät;
wobei das Übermitteln der Testaufgabe an das Edge-Gerät, das zu der Testszene der Testaufgabe passt, umfasst:
Übermitteln (S250) der Testaufgabe an das inaktive Edge-Gerät.

4. Verfahren nach Anspruch 3, das vor dem Zugreifen (S230) auf die Schnittstelle des Edge-Geräte-Clusters, das der Testszene der Testaufgabe entspricht, ferner umfasst:
Bereitstellen, durch einen zwischengeschalteten Proxy-Server, einer Netzwerkadresse für jedes nicht-mobile Edge-Gerät in dem nicht-mobilen Edge-Geräte-Cluster;
wobei das Verbinden (S240) mit dem inaktiven Edge-Gerät umfasst:
Verbinden mit der Netzwerkadresse des inaktiven Edge-Geräts in dem nicht-mobilen Edge-Geräte-Cluster.

5. Verfahren nach einem der Ansprüche 1 bis 4, das nach dem Übermitteln (S103, S330, S430, S560) der Testaufgabe an das Edge-Gerät ferner umfassend:
Durchführen (S260) mindestens eines einer Freigabeoperation und einer Sicherungsoperation an einer historischen Testaufgabe; und/oder
Durchführen (S270) einer Konsistenzprüfung an einem Ausführungszustand und einem Protokoll der Testaufgabe.

6. Verfahren nach einem der Ansprüche 1 bis 5, das vor dem Übermitteln (S103, S330, S430, S560) der Testaufgabe an das Edge-Gerät ferner mindestens eines umfasst von:
Löschen eines Bots auf einem elektronischen Gerät;
dynamisches Überwachen eines inaktiven Ports des elektronischen Geräts, und Binden des inaktiven Ports an das Edge-Gerät; und
Neuinstallieren eines automatisierten Testframeworks auf dem Edge-Gerät.

7. Verfahren nach einem der Ansprüche 1 bis 6, das nach dem Übermitteln (S103, S330, S430, S560) der Testaufgabe an das Edge-Gerät ferner mindestens eines umfasst von:
asynchronem Ausführen einer Installationsaufgabe des zu testenden Modells und einer Vertrauensaufgabe eines Zertifikats, das dem zu testenden Modell entspricht;
Erkennen eines Pop-up-Fensters des zu testenden Modells durch ein Zielerkennungsmodell basierend auf Deep-Learning, und automatisches Auslösen des Pop-up-Fensters während der Ausführung der Testaufgabe durch das Edge-Gerät; und
Auswählen einer zu dem Edge-Gerät passenden Abhängigkeit aus einer integrierten Abhängigkeitsbibliothek, und Übermitteln der Abhängigkeit an das Edge-Gerät.

8. Verfahren nach einem der Ansprüche 1 bis 7, das nach dem Übermitteln (S103, S330, S430, S560) der Testaufgabe an das Edge-Gerät ferner umfasst:
Übermitteln (S440) eines Testdatensatzes und eines einheitlichen Testindex, der dem zu testenden Modell entspricht, an das Edge-Gerät;
wobei der Testdatensatz einen öffentlichen Testdatensatz, der zu einer Kategorie des zu testenden Modells passt, einen privaten Testdatensatz, der einem Testgegenstand entspricht, zu dem das zu testende Modell gehört, und einen Online-Benutzer-Testdatensatz des Testgegenstands umfasst.

9. Verfahren nach einem der Ansprüche 1 bis 8, wobei das Erzeugen (S104, S280, S360, S570) des Testergebnisses basierend auf den Ausführungsinformationen der Testaufgabe umfasst:
Erzeugen (S450) des Testergebnisses basierend auf mindestens einem von einem Ausführungszustand der Testaufgabe, Testdaten, einem Fehlergrund, einem Operationsergebnis des zu testenden Modells, Feldinformationen, Informationen des Edge-Geräts, und einem Installationseingang des zu testenden Modells.

10. Verfahren nach Anspruch 9, das vor dem Erzeugen (S104, S280, S360, S570) des Testergebnisses basierend auf den Ausführungsinformationen der Testaufgabe ferner umfasst:
Erhalten von Ergebnissen einer Vielzahl von Operationen des zu testenden Modells;
Löschen von Ergebnissen einer ersten voreingestellten Anzahl von Operationen aus den Ergebnissen der Vielzahl von Operationen, um Ergebnisse von verbleibenden Operationen zu erhalten; und
Erzeugen des Operationsergebnisses des zu testenden Modells basierend auf den Ergebnissen der verbleibenden Operationen.

11. Verfahren nach einem der Ansprüche 1 bis 10, das vor dem Erhalten (S101, S210, S310, S410, S540) des zu testenden Modells von der Mobile-Edge-Plattform ferner umfasst:
Durchführen mindestens einer Operation eines Überwachens, einer visuellen Anzeige und eines Startens und Stoppens von Unterbrechungspunkten in einem Aufgabenablauf in jeder Phase der Transformation des Cloud-Modells in das zu testende Modell.

12. Verfahren nach Anspruch 11, wobei das Durchführen der mindestens einen Operation des Überwachens, der visuellen Anzeige, und des Startens und Stoppens des Unterbrechungspunkts des Aufgabenablaufs in jeder Phase der Transformation des Cloud-Modells in das zu testende Modell umfasst:
Verwenden eines Planungs-Rahmenwerks für verteilte Aufgaben zum Durchführen der Überwachung, der visuellen Anzeige, und des Startens und Stoppens von Unterbrechungspunkten in einem Aufgabenablauf in Komprimierungs-, Kompatibilitäts-, Beschleunigungs- und Paketierungsphasen der Transformation des Cloud-Modells in das zu testende Modell; und
Erfassen eines Protokolls, das von einer Modelltransformations-Spiegelbibliothek erzeugt wurde, und Durchführen einer visuellen Anzeige des erfassten Protokolls, wobei die Modelltransformations-Spiegelbibliothek dazu ausgebildet ist, ein Rahmenwerk des Cloud-Modells in ein Rahmenwerk des zu testenden Modells zu transformieren.

13. Vorrichtung (660) zum Testen von Edge-Computing, umfassend:
ein Beschaffungsmodul (601), das dazu ausgebildet ist, ein zu testendes Modell von einer Mobile-Edge-Plattform zu erhalten, wobei die Mobile-Edge-Plattform einem Deep-Learning-Modell zugeordnet ist und wobei die Mobile-Edge-Plattform dazu ausgebildet ist, ein Modell einer Cloud in ein Modell, das auf ein Edge-Gerät angewendet wird, zu transformieren, wobei das transformierte Modell das zu testende Modell ist;
ein Aufgabenerzeugungsmodul (602), das dazu ausgebildet ist, eine Testaufgabe basierend auf dem zu testenden Modell zu erzeugen, wobei die Testaufgabe das zu testende Modell und ein automatisiertes Testprogramm zum Betreiben des zu testenden Modells umfasst;
ein Übermittlungsmodul (603), das dazu ausgebildet ist, die Testaufgabe an ein Edge-Gerät zu übermitteln, um es dem Edge-Gerät zu ermöglichen, das zu testende Modell durch Ausführen des automatisierten Testprogramms zu betreiben; und
ein Ergebniserzeugungsmodul (604), das dazu ausgebildet ist, ein Testergebnis basierend auf Ausführungsinformationen der Testaufgabe zu erzeugen, wobei das Testergebnis die Verfügbarkeit und Korrektheit des zu testenden Modells und die Fähigkeit und Leistung des Edge-Geräts, das mit dem zu testenden Modell kompatibel ist, widerspiegelt.

14. Nichtflüchtiges computerlesbares Speichermedium mit darauf gespeicherten Computeranweisungen, wobei die Computeranweisungen dazu ausgebildet sind, einen Computer zu veranlassen, das Verfahren zum Testen von Edge-Computing nach einem der Ansprüche 1 bis 12 auszuführen.

## Revendications

1. Procédé de test d'informatique périphérique, comprenant :
l'obtention (S101, S210, S310, S410, S540) d'un modèle à tester à partir d'une plate-forme périphérique mobile, dans lequel la plate-forme périphérique mobile est associée à un modèle d'apprentissage profond et dans lequel la plate-forme périphérique mobile est configurée pour transformer un modèle d'un nuage en un modèle qui doit être appliqué à un dispositif périphérique, le modèle transformé étant le modèle à tester ;
la génération (S102, S220, S320, S420, S550) d'une tâche de test sur la base du modèle à tester, la tâche de test comprenant le modèle à tester et un programme de test automatisé pour le fonctionnement du modèle à tester ;
la fourniture (S103, S330, S430, S560) de la tâche de test à un dispositif périphérique, pour permettre au dispositif périphérique de faire fonctionner le modèle à tester en exécutant le programme de test automatisé, et
la génération (S104, S280, S360, S570) d'un résultat de test sur la base d'informations d'exécution de la tâche de test, le résultat de test reflétant la disponibilité et l'exactitude du modèle à tester et une capacité et une performance du dispositif périphérique compatible avec le modèle à tester.

2. Procédé selon la revendication 1, dans lequel la fourniture (S103, S330, S430, S560) de la tâche de test au dispositif périphérique comprend l'une parmi :
la fourniture de la tâche de test à différents dispositifs périphériques ;
la fourniture de la tâche de test au dispositif périphérique et le fonctionnement d'un modèle de nuage correspondant au modèle à tester dans un nuage ;
la fourniture des tâches de test différentes à un dispositif périphérique, des tâches de test différentes comprenant des modèles à tester différents ; et
la fourniture de la tâche de test à un dispositif périphérique concordant avec une scène de test de la tâche de test, la scène de test comprenant une scène mobile et une scène non mobile.

3. Procédé selon la revendication 2, avant la fourniture de la tâche de test au dispositif périphérique concordant avec la scène de test de la tâche de test, comprenant en outre :
l'accès (S230) à une interface d'une grappe de dispositifs périphériques correspondant à la scène de test de la tâche de test pour obtenir un dispositif périphérique inactif renvoyé par la grappe de dispositifs périphériques, la grappe de dispositifs périphériques comprenant une grappe de dispositifs périphériques mobiles et une grappe de dispositifs périphériques non mobiles ; et
la connexion (S240) avec le dispositif périphérique inactif ;
dans lequel la fourniture de la tâche de test au dispositif périphérique concordant avec la scène de test de la tâche de test comprend :
la fourniture (S250) de la tâche de test au dispositif périphérique inactif.

4. Procédé selon la revendication 3, avant l'accès (S230) à l'interface de la grappe de dispositifs périphériques correspondant à la scène de test de la tâche de test, comprenant en outre :
la délivrance, par un serveur mandataire intermédiaire, d'une adresse réseau pour chaque dispositif périphérique non mobile dans la grappe de dispositifs périphériques non mobiles ;
dans lequel la connexion (S240) avec le dispositif périphérique inactif comprend :
la connexion avec l'adresse réseau du dispositif périphérique inactif dans la grappe de dispositifs périphériques non mobiles.

5. Procédé selon l'une des revendications 1 à 4, après la fourniture (S103, S330, S430, S560) de la tâche de test au dispositif périphérique, comprenant en outre :
la réalisation (S260) d'au moins une parmi une opération de libération et une opération de sauvegarde sur une tâche de test historique ; et/ou
la réalisation (S270) d'une vérification de cohérence sur un état d'exécution et d'un journal de la tâche de test.

6. Procédé selon l'une des revendications 1 à 5, avant la fourniture (S103, S330, S430, S560) de la tâche de test au dispositif périphérique, comprenant en outre au moins une parmi :
la suppression d'un dispositif zombie sur un dispositif électronique ;
la surveillance dynamique d'un port inactif du dispositif électronique et la liaison du port inactif au dispositif périphérique ; et
la réinstallation d'une infrastructure de test automatisé sur le dispositif périphérique.

7. Procédé selon l'une des revendications 1 à 6, après la fourniture (S103, S330, S430, S560) de la tâche de test au dispositif périphérique, comprenant en outre au moins une parmi :
l'exécution d'une tâche d'installation du modèle à tester et d'une tâche de confiance d'un certificat correspondant au modèle à tester de manière asynchrone ;
la détection d'une fenêtre contextuelle du modèle à tester par un modèle de détection de cible basé sur l'apprentissage profond et le déclenchement automatique de la fenêtre contextuelle durant l'exécution de la tâche de test par le dispositif périphérique ; et
la sélection d'une dépendance concordant avec le dispositif périphérique à partir d'une bibliothèque de dépendance intégrée, et la fourniture de la dépendance au dispositif périphérique.

8. Procédé selon l'une des revendications 1 à 7, après la fourniture (S103, S330, S430, S560) de la tâche de test au dispositif périphérique, comprenant en outre :
la fourniture (S440) d'un jeu de données de test et d'un indice de test unifié correspondant au modèle à tester au dispositif périphérique ;
dans lequel le jeu de données de test comprend un jeu de données de test public concordant avec une catégorie du modèle à tester, un jeu de données de test privé correspondant à un élément de test auquel le modèle à tester appartient, et un jeu de données de test utilisateur en ligne de l'élément de test.

9. Procédé selon l'une des revendications 1 à 8, dans lequel la génération (S104, S280, S360, S570) du résultat de test sur la base des informations d'exécution de la tâche de test comprend :
la génération (S450) du résultat de test sur la base d'au moins un parmi un état d'exécution de la tâche de test, des données de test, une raison d'échec, un résultat de fonctionnement du modèle à tester, des informations d'exploitation, des informations du dispositif périphérique et une entrée d'installation du modèle à tester.

10. Procédé selon la revendication 9, avant la génération (S104, S280, S360, S570) du résultat de test sur la base des informations d'exécution de la tâche de test, comprenant en outre :
l'obtention de résultats d'une pluralité de fonctionnements du modèle à tester ;
la suppression de résultats de premiers nombres prédéfinis de fonctionnements parmi les résultats de la pluralité de fonctionnements pour obtenir des résultats de fonctionnements restants ; et
la génération du résultat de fonctionnement du modèle à tester sur la base des résultats des fonctionnements restants.

11. Procédé selon l'une des revendications 1 à 10, avant l'obtention (S101, S210, S310, S410, S540) du modèle à tester à partir de la plate-forme périphérique mobile, comprenant en outre :
la réalisation d'au moins une opération de surveillance, d'affichage visuel et de démarrage et d'arrêt de points d'interruption sur un flux de tâches à chaque étape de la transformation du modèle de nuage dans le modèle à tester.

12. Procédé selon la revendication 11, dans lequel la réalisation de l'au moins une opération de surveillance, d'affichage visuel et de démarrage et d'arrêt de points d'interruption sur le flux de tâches à chaque étape de la transformation du modèle de nuage dans le modèle à tester comprend :
l'emploi d'une infrastructure de planification de tâche distribuée pour réaliser la surveillance, l'affichage visuel et le démarrage et l'arrêt de points d'interruption sur un flux de tâches au niveau des étapes de compression, de compatibilité, d'accélération et de conditionnement de la transformation du modèle de nuage dans le modèle à tester ; et
la capture d'un journal généré par une bibliothèque de miroirs de transformation de modèle, et la réalisation d'un affichage visuel sur le journal capturé, la bibliothèque de miroirs de transformation de modèle étant configurée pour transformer une infrastructure du modèle de nuage en une infrastructure du modèle à tester.

13. Appareil (660) de test d'informatique périphérique, comprenant :
un module d'obtention (601) configuré pour obtenir un modèle à tester à partir d'une plate-forme périphérique mobile, dans lequel la plate-forme périphérique mobile est associée à un modèle d'apprentissage profond et dans lequel la plate-forme périphérique mobile est configurée pour transformer un modèle d'un nuage en un modèle qui doit être appliqué à un dispositif périphérique, le modèle transformé étant le modèle à tester ;
un module de génération de tâche (602) configuré pour générer une tâche de test sur la base du modèle à tester, la tâche de test comprenant le modèle à tester et un programme de test automatisé pour le fonctionnement du modèle à tester ;
un module de fourniture (603) configuré pour fournir la tâche de test à un dispositif périphérique, pour permettre au dispositif périphérique de faire fonctionner le modèle à tester en exécutant le programme de test automatisé ; et
un module de génération de résultat (604) configuré pour générer un résultat de test sur la base d'informations d'exécution de la tâche de test, le résultat de test reflétant la disponibilité et l'exactitude du modèle à tester et une capacité et une performance du dispositif périphérique compatible avec le modèle à tester.

14. Support de stockage non transitoire lisible par ordinateur comportant des instructions d'ordinateur stockées dessus, dans lequel les instructions d'ordinateur sont configurées pour conduire un ordinateur à exécuter le procédé de test d'informatique périphérique selon l'une des revendications 1 à 12.
